(19) Europäisches Patentamt
European Patent Office
Office européen des brevets

(11) EP 2 949 676 B2

(12) NOUVEAU FASCICULE DE BREVET EUROPEEN
Après la procédure d'opposition

(45) Date de publication et mention de la décision concernant l'opposition:
**01.10.2025 Bulletin 2025/40**

(45) Mention de la délivrance du brevet:
**22.02.2023 Bulletin 2023/08**

(21) Numéro de dépôt: **15168429.7**

(22) Date de dépôt: **20.05.2015**

(51) Classification Internationale des Brevets (IPC):
***C08G 18/48*** (2006.01) ***C08G 18/75*** (2006.01)
***C08G 18/76*** (2006.01) ***C08G 18/10*** (2006.01)
***C08G 18/30*** (2006.01) ***C09J 175/08*** (2006.01)

(52) Classification Coopérative des Brevets (CPC):
(C-Sets disponibles)
**C08G 18/4845; C08G 18/10; C08G 18/307; C08G 18/755; C08G 18/758; C08G 18/7642; C08G 18/7671; C09J 175/08;** C08G 2170/40
(Cont.)

# (54) COMPOSITION DE POLYURÉTHANE À TERMINAISONS NCO À BASE DE MDI NON THERMOFUSIBLE ET À FAIBLE TENEUR EN MONOMÈRE MDI, COMPRENANT AU MOINS UN COMPOSÉ ISOCYANATE DE VOLUME MOLAIRE PARTICULIER

POLYURETHANZUSAMMENSETZUNG MIT NCO-ENDEN AUF DER BASIS VON NICHT HEISSSCHMELZBAREM MDI UND GERINGEM GEHALT AN MDI-MONOMER, DIE MINDESTENS EINE ISOCYANAT-VERBINDUNG MIT SPEZIFISCHEM MOLVOLUMEN ENTHÄLT

NON-HOT-MELT MDI-BASED POLYURETHANE COMPOSITION BEARING NCO END GROUPS AND HAVING A LOW CONTENT OF MDI MONOMER, COMPRISING AT LEAST ONE ISOCYANATE COMPOUND OF PARTICULAR MOLAR VOLUME

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.05.2014 FR 1454822**

(43) Date de publication de la demande:
**02.12.2015 Bulletin 2015/49**

(73) Titulaire: **BOSTIK SA**
**92800 Puteaux (FR)**

(72) Inventeur: **Sanz, Federico**
**60750 Choisy au Bac (FR)**

(74) Mandataire: **Arkema Patent**
**Arkema France**
**DRD-DPI**
**51, Esplanade du Général de Gaulle**
**CS 10478**
**92907 Paris La Défense Cedex (FR)**

(56) Documents cités:
**EP-A1- 1 619 215**
**EP-A2- 0 300 388**
**WO-A1-2005/097861**
**WO-A1-2011/051019**
**DE-A1- 102008 025 793**
**US-A- 4 125 545**
**US-A1- 2004 162 385**
**US-A1- 2006 020 101**
**US-B1- 6 515 164**

- **ANONYMOUS: "p-Toluenesulfonyl isocyanate 96 4083-64-1", DATASHEET, SIGMA ALDRICH, 21 March 2024 (2024-03-21), pages 1 - 7, XP093144224, Retrieved from the Internet <URL:https://www.sigmaaldrich.com/NL/en/product/aldrich/189278> [retrieved on 20240321]**
- **Müller, Bodo and Rath, Walte " Formulierung von Kleb- undDichtstoffen", 2004, Vincentz Network Hannover, pages 129-132**

EP 2 949 676 B2

(52) Classification Coopérative des Brevets (CPC):
(Cont.)

C-Sets
**C08G 18/10, C08G 18/307;**
**C08G 18/10, C08G 18/7642**

## Description

La présente invention concerne une composition de polyuréthane à terminaisons NCO à base de diisocyanate de diphényle méthane (MDI) non thermofusible et à faible teneur en monomère MDI issu de la synthèse dudit polyuréthane, comprenant au moins un composé isocyanate de volume molaire particulier tel que décrit ultérieurement (noté composé (A)).

Grâce à la présence dudit composé (A), la composition de polyuréthane selon l'invention présente une stabilité améliorée en terme de viscosité, se traduisant par une augmentation de viscosité réduite dans le temps.

La présente invention concerne également l'utilisation d'une telle composition de polyuréthane pour fabriquer une composition adhésive, de mastic et/ou de revêtement de surface, notamment pour le domaine de la construction, qui soit stable dans le temps en terme de viscosité.

La présente invention concerne en outre un procédé de préparation de telles compositions selon l'invention stables dans le temps en terme de viscosité, caractérisé en ce que le composé (A) (ou l'ensemble des composés (A)) est ajouté en post-synthèse du (des) polyuréthane(s) à terminaisons NCO à base de diisocyanate de diphényle méthane (MDI) non thermofusible(s) dans une composition à faible teneur en monomère MDI comprenant le(s)dit(s) polyuréthane(s).

Pour répondre au besoin du plus grand nombre, on cherche à mettre au point des compositions de revêtement de surface, de mastic et d' adhésif utilisables ou applicables à basse température (entre 5 et 35°C) et notamment à température ambiante (23°C).

De nombreuses compositions de revêtement de surface, de mastic et d'adhésif disponibles sur le marché sont fabriquées à partir de polyuréthanes réactifs à base de MDI, possédant notamment des groupes isocyanates terminaux qui réticulent en présence d'humidité.

Toutefois, ces compositions présentent en général l'inconvénient de comporter des teneurs importantes en MDI provenant de la réaction de synthèse du polyuréthane, susceptibles de conduire à un certain nombre d'inconvénients, dont entre autre des problèmes de toxicité.

La préparation de polyuréthanes à terminaisons NCO à base de MDI se fait traditionnellement par réaction d'un polyol avec un excès stoechiométrique de MDI. Cet excès stoechiométrique peut être traduit par un rapport molaire NCO/OH (noté « rapport NCO/OH ») strictement supérieur à 1, qui correspond au rapport molaire du nombre de groupes isocyanates (NCO) sur le nombre de groupes hydroxyles (OH) portés par les espèces réactives porteuses de telles fonctions, utilisées dans la préparation du polyuréthane. Ledit excès stoechiométrique est nécessaire à l'obtention de groupes isocyanates terminaux sur le polyuréthane. Selon le rapport molaire NCO/OH choisi, le polyuréthane synthétisé est obtenu avec un excédent plus ou moins important de monomère MDI résiduel, correspondant au monomère MDI non réagi en fin de réaction.

Afin de réduire les inconvénients liés à la présence d'une teneur élevée en MDI, des recherches ont été menées pour synthétiser des polyuréthanes à terminaisons NCO à base de MDI avec un minimum de monomère MDI résiduel.

Cependant, il a été observé que les compositions de polyuréthane possédant une teneur en monomère MDI inférieure ou égale à 1% en poids par rapport au poids de la composition de polyuréthane, sont hautement visqueuses à température ambiante et présentent des problèmes de stabilité dans le temps en terme de viscosité.

En effet, ces compositions de polyuréthane à faible teneur en monomère MDI ont une durée de vie limitée au stockage et voient leur viscosité augmenter rapidement au cours du temps, jusqu'à devenir trop visqueuses pour pouvoir être formulées sous la forme d'une composition de revêtement de surface, d'une composition adhésive ou d'une composition de mastic, utilisable ou applicable à basse température (5-35°C), et notamment à température ambiante (23°C).

Il est connu d'utiliser des diluants tel que des solvants organiques hydrocarbonés ou des plastifiants pour diminuer la viscosité de compositions de polyuréthane à terminaisons NCO à faible teneur en monomère diisocyanate résiduel. Toutefois, ces diluants présentent l'inconvénient de devoir être utilisés dans des quantités importantes, ce qui n'est généralement pas souhaité. En outre, ces diluants ne permettent pas de stabiliser efficacement l'évolution de viscosité de telles compositions de polyuréthane, notamment sur le long terme.

US6515164 décrit la préparation d'un prépolymère de polyuréthane comprenant des groupes NCO obtenu à partir d'au moins deux types de diisocyanates de réactivité différentes et avec une teneur en monomère diisocyanate non réagi faible.

DE102008025793 décrit des compositions adhésives et de mastic monocomposant comprenant (A) au moins un prépolymère de polyuréthane à terminaisons NCO, préparé essentiellement à partir de TDI ou MDI, avec un taux de NCO inférieur à 20%, (B) au moins un polyisocyanate ayant au moins deux fonctions isocyanate et un taux de NCO supérieur à 10%, et une teneur en monomères diisocyanates inférieure à 0,1% en poids.

WO 2005/097861 décrit la préparation d'un prépolymère de polyuréthane à base de 2,4'-MDI et/ou 2,4-TDI comprenant des groupes NCO, avec une teneur en monomère MDI/TDI non réagi faible, et de faible viscosité pour une mise en oeuvre aisée.

Alternativement, il a été proposé dans la demande de brevet WO 2011/051019, d'ajouter un ester d'acide monocarboxylique ou dicarboxylique en $C_2$-$C_{24}$ pour diminuer la viscosité d'une composition de polyuréthane à terminaisons NCO à faible teneur en monomère diisocyanate résiduel. Dans les exemples, il a été démontré qu'en ajoutant 5 à 6% en poids d'un ester particulier dans une composition de polyuréthane à terminaisons NCO à base de TDI à faible teneur en monomère TDI résiduel, la viscosité de la composition n'évoluait plus ou quasiment plus dans le temps au bout d'une semaine à 40°C.

Toutefois, l'efficacité de cette stabilisation reste à améliorer, notamment au vu des quantités d'agent stabilisant utilisées et/ou de la durée de stabilisation.

Par ailleurs, aucun effet stabilisant n'a été démontré sur des compositions de polyuréthane à terminaisons NCO à base de MDI à faible teneur en monomère MDI résiduel, ces dernières étant généralement plus instables en terme de viscosité que les compositions à base de polyuréthane à terminaisons NCO à base de TDI à faible teneur en TDI résiduel.

Ainsi, il existe un besoin de mettre à disposition une composition de polyuréthane à terminaisons NCO à base de MDI, présentant une teneur en MDI inférieure ou égale à 1% en poids par rapport au poids de la composition de polyuréthane, ne présentant pas tout ou partie des inconvénients de l'art antérieur.

En particulier, il existe un besoin de mettre à disposition une composition de polyuréthane à terminaisons NCO à base de MDI présentant une teneur en MDI inférieure ou égale à 1% en poids par rapport au poids de ladite composition, pouvant être stabilisée en terme de viscosité de manière efficace, notamment à l'aide d'une teneur totale en agent stabilisant plus faible au regard de l'art antérieur.

Il existe également un besoin de mettre à disposition une composition de polyuréthane à terminaisons NCO à base de MDI présentant une teneur en MDI inférieure ou égale à 1% en poids par rapport au poids de ladite composition, suffisamment stable en terme de viscosité pour pouvoir être utilisée à basse température (5-35°C) et notamment à température ambiante (23°C) même après de longues durées de stockage (par exemple 2-4 semaines à 20-40°C dans des conditions anhydres).

Par ailleurs, il existe un besoin de formuler une composition adhésive, de mastic et/ou de revêtement de surface comprenant au moins un polyuréthane à terminaisons NCO à base de MDI et une teneur en MDI inférieure ou égale à 1% en poids par rapport au poids de ladite composition, suffisamment stable en terme de viscosité pour pouvoir être mise en oeuvre, et notamment extrudée ou appliquée, facilement à basse température (5-35°C) et notamment à température ambiante (23°C), même après de longues durées de stockage.

Il existe en outre un besoin de formuler une composition adhésive, de mastic et/ou de revêtement de surface, comprenant au moins un polyuréthane à terminaisons NCO à base de MDI et une teneur en MDI inférieure ou égale à 1% en poids par rapport au poids de ladite composition, présentant par ailleurs des propriétés mécaniques (élasticité, module et cohésion) satisfaisantes.

De manière surprenante, il a été trouvé que l'ajout d'au moins un composé isocyanate de volume molaire inférieur ou égale à 300 mL/mol (composé (A)) dans une composition comprenant au moins un polyuréthane non thermofusible à base de MDI à terminaisons NCO et une teneur en MDI inférieure ou égale à 1% en poids par rapport au poids de ladite composition, permettait de répondre en tout ou partie à ces besoins.

En particulier, il a été trouvé que l'ajout d'au moins un composé (A) permettait de réduire de manière efficace et satisfaisante l'augmentation de viscosité dans le temps, d'une composition de polyuréthane comprenant au moins un polyuréthane non thermofusible à base de MDI à terminaisons NCO et une teneur en MDI inférieure ou égale à 1% en poids par rapport au poids de ladite composition, permettant ainsi d'obtenir des compositions suffisamment stables pour pouvoir être facilement mises en oeuvre à basse température (5-35°C) et notamment à température ambiante (23°C), même après de longues durées de stockage (par exemple 2-4 semaines à 20-40°C dans des conditions anhydres).

Par ailleurs, il a été trouvé que l'addition d'au moins un composé (A) dans une composition adhésive, de mastic et/ou de revêtement de surface formulée à partir d'une composition de polyuréthane comprenant au moins un polyuréthane non thermofusible à base de MDI à terminaisons NCO et une teneur en MDI inférieure à 1% en poids par rapport au poids de la composition de polyuréthane, à l'une quelconque de ses étapes de préparation, postérieure à l'addition de ladite composition de polyuréthane dans la composition adhésive, de mastic et/ou de revêtement de surface, permettait d'obtenir les mêmes avantages que suscités.

En outre, il a été observé que l'utilisation d'une petite quantité de composé(s) (A) suffisait à obtenir une stabilisation de la viscosité d'une composition de polyuréthane comprenant au moins un polyuréthane non thermofusible à base de MDI à terminaisons NCO et une teneur en MDI inférieure ou égale à 1% en poids par rapport au poids de la composition de polyuréthane, permettant ainsi de formuler des compositions de revêtement de surface, de mastic et/ou d'adhésif, adaptées notamment au domaine de la construction, stables dans le temps en terme de viscosité et présentant des propriétés mécaniques et des propriétés applicatives (extrusion ou d'enduction) satisfaisantes. En particulier, lesdites propriétés ne subissent pas de dégradation substantielle consécutivement à l'ajout de composé(s) (A).

La présente demande porte donc sur l'utilisation d'au moins un composé (A) possédant un volume molaire inférieur ou égale à 300 millilitres par mole (mL/mol) comme agent stabilisant de viscosité d'une composition de polyuréthane comprenant au moins un polyuréthane à base de MDI à terminaisons NCO présentant une viscosité

mesurée à 23°C inférieure ou égale à 300 000 mPa.s et une teneur en MDI inférieure ou égale à 1% en poids par rapport au poids de la composition de polyuréthane, ledit composé (A) étant choisi parmi ceux dont le(s) groupe(s) isocyanate n'est (ne sont) pas relié(s) à un atome de carbone d'un cycle hydrocarboné aromatique, le volume molaire étant mesuré à une température allant de 20 à 25°C et à pression atmosphérique de 1 bar, ledit composé (A) étant choisi parmi les diisocyanates. Un tel agent stabilisant est capable à lui seul, sans avoir recours à des agents stabilisants de viscosité de l'art antérieur dans les quantités prescrites par l'art antérieur, de réduire l'augmentation de la viscosité dans le temps d'une composition de polyuréthane comprenant au moins un polyuréthane non thermofusible à base de MDI à terminaisons NCO et une teneur en MDI inférieure ou égale à 1% en poids par rapport au poids de la composition de polyuréthane.

La présente demande porte également sur l'utilisation d'au moins un composé (A) comme agent stabilisant de viscosité d'une composition adhésive, de mastic et/ou de revêtement de surface formulée à partir d'une composition de polyuréthane comprenant au moins un polyuréthane non thermofusible à base de MDI à terminaisons NCO et une teneur en MDI inférieure ou égale à 1% en poids par rapport au poids de la composition de polyuréthane.

D'autres objets et caractéristiques de la présente invention apparaîtront plus clairement à la lecture de la description et des exemples.

Dans la présente demande, en l'absence d'indication contraire :

- la viscosité est mesurée à température ambiante (23°C). La mesure de viscosité à 23°C peut se faire à l'aide d'un viscosimètre Brookfield selon la norme ISO 2555. Typiquement, la mesure réalisée à 23°C peut se faire à l'aide d'un viscosimètre Brookfield RVT, d'une aiguille adaptée au domaine de viscosité et à une vitesse de rotation de 20 tours par minute (tr/mn) ;
- les masses molaires moyennes en en poids, exprimées en dalton (Da), sont déterminées par chromatographie par perméation de gel (GPC), la colonne étant calibrée avec des étalons de PolyEthylène Glycol (PEG) ;
- les différents modes de réalisations des compositions selon l'invention, destinées à être utilisées comme compositions adhésives, de mastic et/ou de revêtement de surface, décrits dans la présente demande peuvent être combinés entre eux, dans la mesure où l'utilisation visée est la même (adhésif, mastic, ou revêtement de surface).

La présente demande a pour objet en premier lieu une composition de polyuréthane comprenant :

a) au moins 98% en poids d'au moins un polyuréthane à terminaisons NCO à base de diisocyanate de diphényle méthane (MDI), présentant une viscosité mesurée à 23°C inférieure ou égale à 300 000 mPa.s, ladite viscosité étant mesurée à l'aide d'un viscosimètre Brookfield selon la norme ISO 2555,
b) une teneur en monomère MDI, issu de la synthèse dudit polyuréthane a), inférieure ou égale à 1% en poids,
c) au moins un composé isocyanate de volume molaire inférieur ou égal à 300 millilitres par mol (mL/mol) (noté composé (A)) choisi(s) parmi ceux dont le(s) groupe(s) isocyanate n'est (ne sont) pas relié(s) à un atome de carbone d'un cycle hydrocarboné aromatique,

le volume molaire étant mesuré à une température allant de 20 à 25°C et à pression atmosphérique de 1 bar,
les pourcentages en poids étant exprimés par rapport au poids total de la composition de polyuréthane,
ladite composition étant caractérisée en ce que le(s) composé(s) (A) est(sont) choisi(s) parmi les diisocyanates.

Le(s) polyuréthane(s) à terminaisons NCO à base de MDI utilisé(s) selon l'invention est (sont) non thermofusible(s), c'est-à-dire qu'il(s) n'est (ne sont) pas solide(s) à une température allant de 5 à 35°C, et notamment à température ambiante (23°C). En particulier, il(s) présente(nt) une viscosité mesurée à 23°C, inférieure ou égale à 300 000 mPa.s, de préférence inférieure ou égale à 250 000 mPa.s, plus préférentiellement allant de 100 à 200 000 mPa.s., et mieux encore allant de 4000 à 150 000 mPa.s (millipascal seconde). De tels polyuréthanes sont suffisamment fluides à une température allant de 5 à 35°C pour pouvoir être mis en oeuvre aisément dans cette gamme de température à l'aide de dispositifs d'application et/ou de mélange habituellement employés dans le domaine des adhésifs, mastics et/ou revêtement, tel qu'illustré notamment dans les exemples de la présente demande.

La composition de polyuréthane(s) à terminaisons NCO à base de MDI à faible teneur en MDI, non stabilisée, pouvant être utilisée selon l'invention pour préparer une composition de polyuréthane(s), stable, selon l'invention, est susceptible d'être obtenue par une réaction de polyaddition d'une composition constituée de polyisocyanate(s) comprenant au moins du MDI, et d'une composition constituée de polyol(s), à une température inférieure à 95°C, de préférence allant de 65 à 90°C, plus préférentiellement de 80 à 85°C, dans des conditions anhydres, avec ou sans catalyseur de réaction, dans des quantités de polyisocyanate(s) et de polyol(s) conduisant à un rapport NCO/OH noté r1 allant de 1,60 à 1,95. Ce procédé de préparation permet de synthétiser un polyuréthane à terminaisons NCO à base de MDI avec peu de monomère MDI résiduel. La teneur en MDI en fin de réaction est en général inférieure ou égale à 1% en poids par rapport au poids du milieu réactionnel. En particulier, en réduisant le rapport NCO/OH dans la plage de valeurs sus-indiquée, il est

possible d'obtenir une composition de polyuréthane à terminaisons NCO à base de MDI avec une teneur en MDI très basse en deçà de la limite de 1% en poids sus-indiquée. Le rapport r1 peut donc aller de 1,60 à 1,90, de préférence de 1,60 à 1,85, en particulier de 1,60 à 1,75, et mieux encore de 1,60 à 1,70. De préférence, ce rapport est choisi de manière à obtenir une composition de polyuréthane à terminaisons NCO à base de MDI avec une teneur en MDI inférieure ou égale à 0,8% en poids, et plus préférentiellement inférieure ou égale à 0,5% en poids par rapport au poids du milieu réactionnel.

Les quantités pondérales des réactifs à charger dans le réacteur pour synthétiser la composition de polyuréthane(s) à terminaisons NCO à base de MDI à faible teneur en MDI utilisée selon l'invention, sont déterminées sur la base du rapport r1, ainsi que, s'agissant des polyols, sur la base de leur masse molaire moyenne en nombre et leur fonctionnalité, ou s'agissant des polyisocyanates, sur la base de leur teneur en groupe isocyanate (%NCO exprimé en pourcentage en poids par rapport au poids de polyisocyanate).

La composition de polyisocyanate(s) sus-citée peut être constituée de MDI seul ou en mélange avec un ou plusieurs monomères polyisocyanates différents du MDI. Ces monomères polyisocyanates peuvent être choisis parmi ceux habituellement utilisés dans la synthèse d'un polyuréthane à terminaisons NCO, de préférence parmi les monomères diisocyanates autres que le MDI, et plus préférentiellement parmi le toluène diisocyanate (TDI), l'isophorone diisocyanate (IPDI), l'hexaméthylène diisocyanate (HDI).

Le MDI utilisé peut être se présenter sous la forme d'un isomère ou d'un mélange d'isomères, tel que le 4,4'-MDI et/ou le 2,4'-MDI. De préférence, le MDI utilisé est constitué à au moins 90% en poids, et mieux encore d'au moins 95% en poids d'isomère 4,4'-MDI par rapport au poids total de MDI.

Plus préférentiellement, la composition de polyisocyanate(s) est constituée d'un ou plusieurs isomères du MDI et d'au moins 90% en poids, et mieux encore d'au moins 95% en poids de 4,4'-MDI par rapport au poids de la composition de polyisocyanate(s).

La composition de polyol(s) sus-citée peut être constituée d'un polyol ou d'un mélange de polyols. En particulier, le(s) polyol(s) utilisable(s) peu(ven)t être choisi(s) parmi ceux possédant une masse molaire moyenne en nombre allant de 1000 à 18000 g/mol, et plus particulièrement ceux possédant une masse molaire moyenne en nombre allant de 1000 à 8000 g/mol.

La composition de polyol(s) est constituée de préférence d'un ou plusieurs polyéthers, et plus préférentiellement d'au moins un polyéther triol.

Mieux encore, la composition de polyol(s) est un mélange de polyéther diol et triol, tel que le polypropylène glycol triol et le polypropylène glycol diol.

La composition de polyisocyanate(s) et de la composition de polyol(s) utilisées dans le procédé de préparation du polyuréthane à terminaisons NCO à base de MDI utilisé selon l'invention sont choisis de préférence de manière à obtenir un polyuréthane à terminaisons NCO à base de MDI présentant notamment une viscosité mesurée à 23°C inférieure ou égale à 300 000 mPa.s.

Le(s) catalyseur(s) de réaction utilisable(s) peu(ven)t être tout catalyseur connu par l'homme du métier pour catalyser la formation de polyuréthane par réaction d'au moins un polyisocyanate et d'au moins un polyol.

La teneur en polyuréthane à terminaisons NCO à base de MDI est de préférence d'au moins 98,5% en poids, plus préférentiellement d'au moins 99% en poids du poids total de la composition de polyuréthane selon l'invention.

La teneur en monomère MDI dans la composition de polyuréthane selon l'invention est de préférence inférieure ou égale à 0,8% en poids, et plus préférentiellement inférieure ou égale à 0,5% en poids du poids total de la composition de polyuréthane selon l'invention.

Le principe de la méthode d'analyse pour la détermination de la concentration en monomères diisocyanate résiduel (MDI) repose sur la réaction spécifique du groupe isocyanate NCO avec une amine (1-(2-méthoxyphényl) pipérazine ou PPZ) pour former des dérivés stables d'urée. Ces dérivés sont obtenus lors de la préparation de l'échantillon à analyser par dilution/solubilisation de cet échantillon à l'aide d'une solution d'acétonitrile à 0,02 mol/L de PPZ. Les dérivés de PZZ formés à partir des isocyanates contenus dans l'échantillon à analyser sont ensuite dosés par un système de Chromatographie Liquide Haute Performance (CLHP) à phase inversée en C18 avec un gradient de phase mobile comprenant un mélange d'eau et d'acétonitrile tamponné à l'aide d'une solution aqueuse de tétrabutylammonium bisulfate à 0,2% en poids, à un pH allant de 2 à 3, muni d'un détecteur Ultra-Violet (UV) fonctionnant à 254nm. Ces composés sont identifiés et quantifiés en comparant leur temps de rétention et leur surface de pics chromatographiques avec ceux des dérivés PPZ étalons obtenus par réaction d'un monomère diisocyanate (MDI) de nature et concentration connue.

L'échantillon à analyser peut être une composition de polyuréthane telle que décrite précédemment, avant ou après stabilisation avec le composé (A).

L'échantillon à analyser peut également être une composition adhésive, de mastic et/ou de revêtement de surface selon l'invention formulée à partir de ladite composition de polyuréthane.

Le(s) composé(s) (A) utilisé(s) selon l'invention est (sont) différent(s) du MDI. De préférence, le(s) composé(s) (A) est (sont) en outre différent(s) du (des) autre(s) polyisocyanate(s) éventuellement utilisé(s) pour la synthèse du polyuréthane à terminaisons NCO à base de MDI selon l'invention.

Le(s) composé(s) (A) utilisé(s) selon l'invention possède(nt) de préférence un volume molaire inférieur ou égal à 250mL/mol, plus préférentiellement inférieur ou égale à 200 mL/mol.

Le volume molaire du composé (A) est défini comme le rapport de la masse molaire, exprimée en gramme par mole (g/mol) sur la masse volumique dudit composé (mesurée à une température allant de 20 à 25°C et à pression atmosphérique de 1 bar), exprimée en gramme par millilitre (g/mL).

Le(s) composé(s) (A) utilisé(s) selon l'invention possède(nt) de préférence une masse molaire inférieure ou égale à 300 g/mol.

Le(s) composé(s) (A) utilisé(s) selon l'invention est (sont) chois(s) parmi les diidocyanates.

Le(s) composé(s) (A) utilisé(s) selon l'invention peu(ven)t être utilisé(s) sous la forme d'un seul composé ou d'un mélange d'au moins deux composés. De préférence, il est utilisé sous la forme d'un seul composé.

Le(s) composé(s) (A) utilisé(s) selon l'invention peu(ven)t être aromatique(s) ou aliphatique(s), linéaire(s) ou ramifié(s), cyclique(s) ou acyclique(s), saturé(s) ou insaturé(s).

Le(s) composé(s) (A) utilisé(s) selon l'invention est (sont) choisi(s) parmi les composés isocyanates dont le(s) groupe(s) isocyanate n'est (ne sont) pas relié(s) à un atome de carbone d'un cycle hydrocarboné aromatique, par exemple à 6 chaînons, tel qu'un phényle. Ces composés présentent un risque toxicologique réduit, par rapport à ceux dont au moins un groupe isocyanate est relié à un atome de carbone d'un cycle hydrocarboné aromatique, par exemple à 6 chaînons, tel qu'un phényle. En effet, l'hydrolyse de ces derniers composés aromatiques conduit à des amines susceptibles de présenter des risques toxicologiques pour l'homme et son environnement.

En particulier, le(s) composé(s) (A) utilisé(s) selon l'invention est (sont) avantageusement choisi(s) parmi les composés isocyanates dont le(s) groupe(s) isocyanate n'est (ne sont) pas relié(s) à un atome de carbone hybridé sp2.

Parmi les compsés (A) utilisable selon l'invention, on préfère utiliser seul ou en mélange:

- les diisocyanates benzyliques, c'est-à-dire comprenant dans leur structure un groupe benzyle et dont au moins un des groupes isocyanate est relié à l'atome de carbone du groupe méthyle substituant le groupe phényle, tels que par exemple:

    - les isomères du xylène diisocyanate (XDI), tel que le méta-xylène diisocyanate (m-XDI) (de volume molaire égal à 157 mL/mol et de masse molaire égale à 138,2 g/mol)

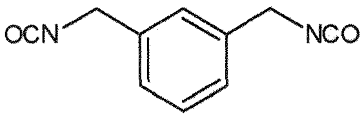

,

    - les isomères du tétraméthylxylène diisocyanate (TMXDI) ou bis(1-isocyanato-1-méthyléthyl)benzène, tel que le méta-tétraméthylxylène diisocyanate (m-TMXDI) (de volume molaire égal à 240 mL/mol et de masse molaire égale à 244,3 g/mol)

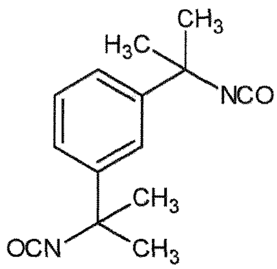

,

    - les isomères du méthylènebis(isocyanatométhyl phényl) tel que 1 ,1'-méthanediylbis[4-(isocyanatométhyl) benzène] (de volume molaire égal à 253,2 mL/mol et de masse molaire égale à 278,3 g/mol)

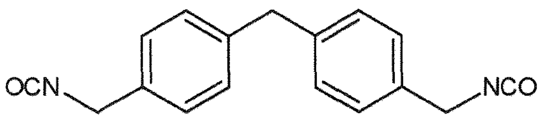

,

- les isomères du bis(isocyanatométhyl)naphthalène tel que le 2,6-bis(isocyanatométhyl)naphthalène (de volume molaire égal à 204,9 mL/mol et de masse molaire égale à 238,2 g/mol)

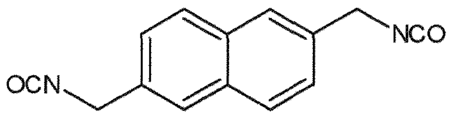

,

- les diisocyanates cycloaliphatiques, notamment les formes hydrogénées des diisocyanates aromatiques cycliques et en particulier les formes hydrogénées des diisocyanates benzyliques, tels que par exemple:

  - la forme hydrogénée des isomères du xylène diisocyanate (HXDI) ou bis(isocyanatométhyl)cyclohexane, tel que le méta-xylène diisocyanate hydrogéné (m-HXDI) et ses isomères (de volume molaire égal à 176 mL/mol et de masse molaire égale à 194,2 g/mol)

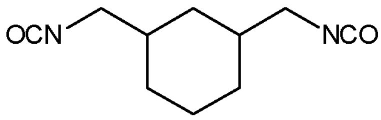

,

  - la forme hydrogénée des isomères du tétraméthylxylène diisocyanate (TMXDI) ou bis(1-isocyanato-1-méthyléthyl)benzène, tel que la forme hydrogénée du méta-tétraméthylxylène diisocyanate (m-TMXDI) (de volume molaire égal à 240,7 mL/mol et de masse molaire égale à 250,3 g/mol)

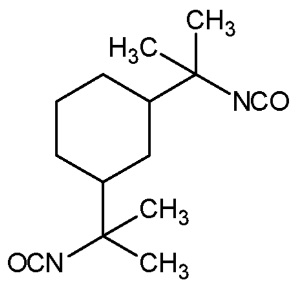

,

  - les isomères du méthylènebis(isocyanatométhyl cyclohexyl) tel que le 1,1'-méthanediylbis[4-(isocyanatométhyl) cyclohexane] (de volume molaire égal à 253,2 mL/mol et de masse molaire égale à 290,4 g/mol)

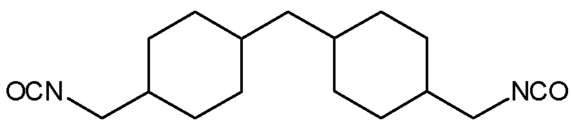

,

  - les isomères du bis(isocyanatométhyl) décahydronaphthalène tel que le 2,6-bis(isocyanatométhyl) décahydronaphthalène (de volume molaire égal à 204,9 mL/mol et de masse molaire égale à 248,3 g/mol)

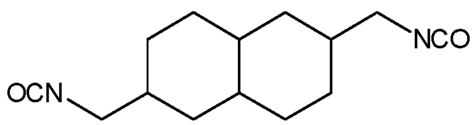

,

  - l'isophorone diisocyanate (IPDI) (de volume molaire égal à 246 mL/mol et de masse molaire égale à 222,3 g/mol)

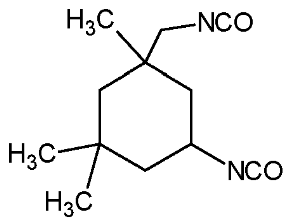

,

- les formes hydrogénées des isomères du toluène diisocyanate (HTDI), telle que les formes hydrogénées du 2,4-TDI et du 2,6-TDI (de volume molaire égal à 160,2 mL/mol et de masse molaire égale à 180,2 g/mol)

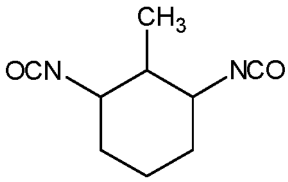

,

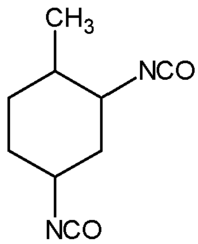

,

- les isomères du cyclohexylène diisocyanate tel que le 1,4-cyclohexylène diisocyanate (de volume molaire égal à 137,3 mL/mol et de masse molaire égale à 166,2 g/mol)

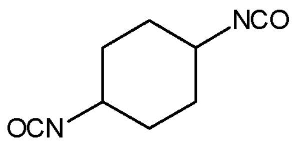

,

- les formes hydrogénées des isomères du naphtalène diisocyanate (HNDI) telle que la forme hydrogénée du 1,5-HNDI (de volume molaire égal à 144 mL/mol et de masse molaire égale à 220,3 g/mol)

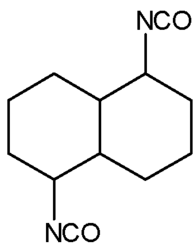

,

- les formes hydrogénées des isomères du diisocyanate de diméthyl diphényle méthane telle que la forme hydrogénée du 3,3'-diméthyl-4,4'-diphenyl diisocyanate (volume molaire égal à 235 mL/mol et de masse molaire égale à 276,4 g/mol)

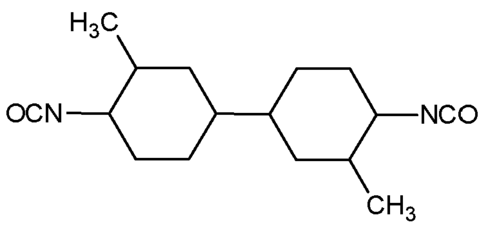

,

- les formes hydrogénées des isomères du diisocyanate de diphényle méthane ou méthylènebis(cyclohexyl isocyanate) (HMDI) telle que la forme hydrogénée du 4,4'-MDI (de volume molaire égal à 212 mL/mol et de masse

molaire égale à 262,3 g/mol)

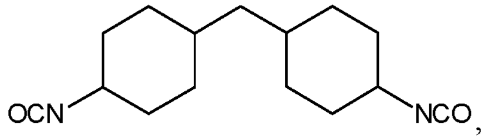

- les diisocyanates aliphatiques acycliques, linéaires ou ramifiés, tels que par exemple:

  - le 1,4-diisocyanatobutane (de volume molaire égal à 126,8 mL/mol et de masse molaire égale à 140,1 g/mol)

    $OCN-(CH_2)_4-NCO$,

  - l'hexaméthylène diisocyanate (HDI) ou 1,6-diisocyanatohexane (de volume molaire égal à 161,7 mL/mol et de masse molaire égale à 168,2 g/mol)

    $OCN-(CH_2)_6-NCO$,

  - le 1,8-diisocyanatooctane (de volume molaire égal à 194,9 mL/mol et de masse molaire égale à 196,3 g/mol)

    $OCN-(CH_2)_8-NCO$,

  - le 1,10-diisocyanatodecane (de volume molaire égal à 229,8 mL/mol et de masse molaire égale à 224,3 g/mol)

    $OCN-(CH_2)_{10}-NCO$,

  - le 1,12-diisocyanatododecane(de volume molaire égal à 268,5 mL/mol et de masse molaire égale à 252,4 g/mol)

    $OCN-(CH_2)_{12}-NCO$.

Parmi tous les composés (A) utilisables, on préfère utiliser le XDI, l'IPDI, le HMDI ou leur mélange.
La teneur totale en composé(s) (A) est non nulle et de préférence inférieure ou égale à 2% en poids, plus préférentiellement inférieure ou égale à 1,5% en poids, en particulier inférieure ou égale à 1% en poids, et mieux encore inférieure ou égale à 0,5% en poids du poids total de la composition de polyuréthane selon l'invention.
La teneur totale en composé(s) (A) est en outre de préférence supérieure ou égale à 0,01% en poids, plus préférentiellement supérieure ou égale à 0,05% en poids du poids total de la composition de polyuréthane selon l'invention. Mieux encore, la teneur en composé(s) (A) va de 0,10 à 1% en poids du poids total de la composition de polyuréthane selon l'invention.
La composition de polyuréthane selon l'invention telle que décrite ci-dessus, peut être utilisée pour fabriquer une composition adhésive, de mastic et/ou de revêtement de surface, notamment pour le domaine de la construction.
La présente demande a donc pour objet en second lieu une composition, utilisable en tant que composition adhésive, de mastic et/ou de revêtement de surface, comprenant :

- de 10 à 30% en poids, de préférence de 15 à 20 % en poids, d'une composition de polyuréthane selon l'invention telle que décrite dans l'un quelconque des paragraphes précédents,
- de 25 à 70% en poids d'au moins une charge,
- de 0,01 à 1% en poids d'au moins un catalyseur de réticulation,

les pourcentages en poids étant exprimés par rapport au poids total de la composition adhésive, de mastic et/ou de revêtement de surface.
Les compositions adhésives, de mastic et/ou de revêtement de surface selon l'invention présentent l'avantage d'être stables en terme de viscosité sur de longues durées de stockage (au moins 2-3 semaines, dans des conditions

anhydres à 20-40°C) et sont de fait faciles à mettre en oeuvre. En particulier, les compositions adhésives, de mastic et/ou de revêtement de surface selon l'invention présentent d'excellentes propriétés d'extrusion ou d'enduction à température ambiante au travers des dispositifs de mélange et/ou d'application de compositions de revêtement, de compositions adhésives ou de mastic conventionnels. Un exemple d'un tel dispositif d'application est décrit dans les exemples de la présente demande.

En outre, les compositions adhésives, de mastic et/ou de revêtement de surface selon l'invention possèdent notamment de bonnes propriétés mécaniques (notamment élasticité et module) adaptées à leur utilisation respective en tant qu'adhésif, revêtement de surface ou mastic. Avantageusement, ces propriétés ne sont pas dégradées après stockage.

De préférence, le choix des teneurs en ingrédients dans la composition adhésive, de mastic et/ou de revêtement de surface selon l'invention, et notamment de la teneur en composition de polyuréthane selon l'invention, est tel que ladite composition adhésive, de mastic et/ou de revêtement de surface comprend une teneur en monomère MDI inférieure à 0,1% en poids par rapport au poids total de la composition adhésive, de mastic et/ou de revêtement de surface.

En réduisant la teneur en MDI en dessous de ce seuil, les compositions adhésive, de mastic et/ou de revêtement de surface selon l'invention présentent notamment des risques de toxicité réduites ou négligeables pour l'homme et son environnement.

De préférence, le choix des teneurs en ingrédients dans la composition adhésive, de mastic et/ou de revêtement de surface selon l'invention, et notamment de la teneur en composé(s) (A) de la composition de polyuréthane selon l'invention, est tel que la composition adhésive, de mastic et/ou de revêtement de surface selon l'invention comprend une teneur (totale) en composé(s) (A) inférieure à 0,5% en poids, et plus préférentiellement inférieure à 0,1% en poids par rapport au poids total de la composition adhésive, de mastic et/ou de revêtement de surface.

Plus préférentiellement, la teneur en monomère MDI est inférieure à 0,1% en poids et la teneur (totale) en composé(s) (A) est inférieure à 0,5% en poids, et mieux encore inférieure à 0,1% en poids par rapport au poids total de la composition adhésive, de mastic et/ou de revêtement de surface selon l'invention.

Ainsi, selon un mode de réalisation préféré, la composition adhésive, de mastic et/ou de revêtement de surface peut comprendre par exemple :

- de 15 à 20% en poids par rapport au poids total de la composition adhésive, de mastic et/ou de revêtement de surface, d'une composition de polyuréthane selon l'invention comprenant :

  a) au moins 98% en poids par rapport au poids de ladite composition de polyuréthane selon l'invention, d'au moins un polyuréthane non thermofusible à terminaisons NCO à base de MDI, telle que décrite dans l'un quelconque des paragraphes précédents,
  b) une teneur en monomère MDI inférieure à 0,5% en poids, par rapport au poids de ladite composition de polyuréthane selon l'invention,
  c) de 0,01% à 1% en poids d'au moins un composé (A), par rapport au poids de ladite composition de polyuréthane selon l'invention,

- de 50 à 70% en poids d'au moins une charge, par rapport au poids total de la composition adhésive, de mastic et/ou de revêtement de surface,
- de 0,01 à 1% en poids d'au moins un catalyseur de réticulation, par rapport au poids total de la composition adhésive, de mastic et/ou de revêtement de surface,
- de 5 à 25% en poids d'au moins un agent rhéologique, par rapport au poids total de la composition adhésive, de mastic et/ou de revêtement de surface.

La composition adhésive, de mastic et/ou de revêtement de surface selon ce mode de réalisation préféré de l'invention comprend moins de 0,1% en poids de MDI et moins de 0,5% en poids de composé(s) (A), par rapport au poids total de ladite composition.

Selon un mode de réalisation plus préféré, la composition adhésive, de mastic et/ou de revêtement de surface peut comprendre :

- de 15 à 20% en poids par rapport au poids total de la composition adhésive, de mastic et/ou de revêtement de surface, d'une composition de polyuréthane selon l'invention comprenant :

  a) au moins 98% en poids par rapport au poids de ladite composition de polyuréthane selon l'invention, d'au moins un polyuréthane non thermofusible à terminaisons NCO à base de MDI, telle que décrite dans l'un quelconque des paragraphes précédents,
  b) une teneur en monomère MDI inférieure à 0,5% en poids, par rapport au poids de ladite composition de

polyuréthane selon l'invention,

c) de 0,01% à moins de 0,5% en poids d'au moins un composé (A), par rapport au poids de ladite composition de polyuréthane selon l'invention,

- de 50 à 70% en poids d'au moins une charge, par rapport au poids total de la composition adhésive, de mastic et/ou de revêtement de surface,
- de 0,01 à 1% en poids d'au moins un catalyseur de réticulation, par rapport au poids total de la composition adhésive, de mastic et/ou de revêtement de surface,
- de 5 à 25% en poids d'au moins un agent rhéologique, par rapport au poids total de la composition adhésive, de mastic et/ou de revêtement de surface.

La composition adhésive, de mastic et/ou de revêtement de surface selon ce mode de réalisation plus préféré de l'invention comprend moins de 0,1% en poids de MDI et moins de 0,1% en poids de composé(s) (A), par rapport au poids total de ladite composition.

A titre de catalyseur(s) de réticulation utilisable(s) dans la composition adhésive, de mastic ou de revêtement de surface selon l'invention, on peut utiliser n'importe quel catalyseur(s) connu(s) par l'homme du métier pour catalyser la réticulation du polyuréthane à terminaisons NCO en présence d'eau (ou d'humidité). L'eau ou l'humidité peut être apportée par la surface du support ou le milieu environnant, de manière naturelle (humidité atmosphérique) ou contrôlée (par exemple, dans une chambre thermostatée à une humidité relative entre 40 et 70% à 23°C, ou un four allant jusqu'à 150°C) au contact de la composition selon l'invention. Cette réticulation se traduit par la création, entre les chaînes polymériques du polyuréthane, de liaisons de type urée qui conduisent à la formation d'un réseau polymérique tridimensionnel.

On peut utiliser par exemple un ou plusieurs catalyseurs de réticulation choisis parmi le dilaurate de dioctyl d'étain, les catalyseurs à base de bismuth, ou encore les catalyseurs aminés tertiaires tels que :

- le 1,8-diazabicyclo[5.4.0]undec-7-ène (DBU)

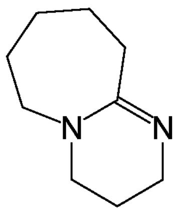

,

- le 1,5-diazabicyclo[4.3.0]non-5-ène (DBN)

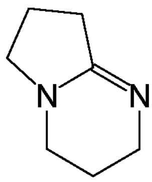

,

- l'éther diéthylique-2,2'-morpholine (DMDEE)

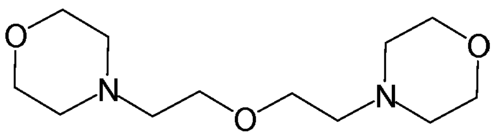

,

- le 1,4-diazabicyclo[2.2.2]octane (DABCO)

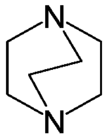

.

Ces catalyseurs de réticulation présentent l'avantage de ne pas être cancérogènes, mutagènes et reprotoxiques (CMR).

De préférence, la quantité de catalyseur de réticulation utilisable va de 0,05 à 0,5% en poids par rapport au poids de la composition adhésive, de mastic et/ou de revêtement de surface selon l'invention.

La (ou les) charge(s) utilisable(s) dans la composition adhésive, de mastic et/ou de revêtement de surface selon l'invention peu(ven)t être choisie(s) parmi les charges minérales et les mélanges de charges organiques et de charges minérales.

A titre d'exemple de charge(s) minérale(s) utilisable(s), on peut utiliser n'importe quelle(s) charge(s) minérale(s) habituellement utilisée(s) dans le domaine des compositions de revêtement de surface, de colle ou de mastic. Ces charges se présentent sous la forme de particules de géométrie diverse. Elles peuvent être par exemples sphériques, fibreuses, ou présenter une forme irrégulière.

De préférence, on utilise de l'argile, du quartz, des charges carbonatées.

Plus préférentiellement, on utilise des charges carbonatées, telles que les carbonates de métaux alcalin ou alcalino-terreux, et plus préférentiellement le carbonate de calcium.

Ces charges peuvent être naturelles ou traitées, par exemple à l'aide d'un acide organique tel que l'acide stéarique, ou d'un mélange d'acides organiques constitué majoritairement d'acide stéarique.

On peut utiliser également des microsphères creuses minérales telles que des microsphères creuses de verre, et plus particulièrement celles en borosilicate de sodium et de calcium ou en aluminosilicate.

La quantité de charge minérale pouvant être utilisée peut notamment varier de 20 à 65% en poids, de préférence de 20 à 50% en poids, et plus préférentiellement de 25 à 40% en poids du poids de la composition adhésive, de mastic et/ou de revêtement de surface selon l'invention.

A titre d'exemple de charge(s) organique(s) utilisable(s), on peut utiliser n'importe quelle(s) charge(s) organique(s) et notamment polymérique(s) habituellement utilisée(s) dans le domaine des compositions de revêtement de surface, de colle ou de mastic

On peut utiliser par exemple du polychlorure de vinyle (PVC), des polyoléfines, du caoutchouc, de l'éthylène vinyl acétate (EVA), des fibres aramides telles que le Kevlar®.

On peut utiliser également des microsphères creuses en polymère thermoplastique expansibles ou non expansibles. On peut notamment citer des microsphères creuses en chlorure de vinylidène/acrylonitrile.

De préférence, on utilise du PVC.

La taille moyenne de particule de la (des) charge(s) utilisable(s) est de préférence inférieure ou égale à 10 microns, plus préférentiellement inférieure ou égale à 3 microns, afin d'éviter leur sédimentation dans la composition adhésive, de mastic et/ou de revêtement de surface selon l'invention au cours de son stockage.

La taille moyenne de particule est mesurée pour une distribution granulométrique en volume et correspondant à 50% en volume de l'échantillon de particules analysé. Lorsque les particules sont sphériques, la taille moyenne de particule correspond au diamètre médian (D50 ou Dv50) qui correspond au diamètre tel que 50% des particules en volume ont une taille inférieure audit diamètre. Dans la présente demande, cette valeur est exprimée en micromètres et déterminée selon la Norme NF ISO 13320-1 (1999) par diffraction laser sur un appareil de type MALVERN.

La composition adhésive, de mastic et/ou de revêtement de surface selon l'invention peut comprendre au moins un agent plastifiant à raison de 5 à 20% en poids, de préférence de 10 à 15% en poids du poids de la composition adhésive, de mastic et/ou de revêtement de surface selon l'invention.

A titre d'exemple d'agent plastifiant utilisable, on peut utiliser n'importe quel agent plastifiant habituellement utilisé dans le domaine des compositions adhésives, de mastic et/ou de revêtement de surface.

De préférence, on utilise :

- le diisodecyl phtalate (DIDP)
- un ester d'acide alkylsulphonique et de phénol, tel que commercialisé sous le nom Mesamoll® par la société Lanxess
- le diisononyl-1,2-cyclohexanedicarboxylate, tel que commercialisé sous le nom Hexamoll Dinch® par la société BASF.

La composition adhésive, de mastic et/ou de revêtement de surface selon l'invention peut comprendre au moins un agent de rhéologie.

A titre d'exemple d'agent(s) de rhéologie utilisable(s), on peut citer n'importe quel agent de rhéologie habituellement utilisé dans le domaine des compositions adhésives, de mastic et/ou de revêtement de surface.

De préférence, on utilise un ou plusieurs agents de rhéologie choisis parmi les agents thioxotropiques, et plus préférentiellement parmi:

- les plastisols de PVC, correspondant à une suspension de PVC dans un agent plastifiant miscible avec le PVC, obtenue in situ par chauffage à des températures allant de 60°C à 80°C. Ces plastisols peuvent être ceux décrits notamment dans l'ouvrage « Polyurethane Sealants », Robert M. Evans, ISBN 087762-998-6,
- la silice pyrogénée,
- des dérivés d'urée issus de la réaction d'un monomère diisocyanate aromatique tel que le 4,4'-MDI avec une amine aliphatique telle que la butylamine. La préparation de tels dérivés d'urée est décrite notamment dans la demande FR 1 591 172.

La teneur totale en agent(s) de rhéologie(s) pouvant être utilisée peut varier de 1 à 40% en poids, de préférence de 5 à 30 % en poids, plus préférentiellement de 10 à 25% en poids du poids de la composition adhésive, de mastic et/ou de revêtement de surface selon l'invention.

De préférence, la composition adhésive, de mastic et/ou de revêtement de surface selon l'invention ne comprend pas de solvant organique hydrocarboné, tel que ceux ayant un point d'ébullition inférieur à 250°C à pression atmosphérique, tel que le xylène.

La composition selon l'invention peut comprendre au moins un adjuvant choisi parmi les promoteurs d'adhérence tels que les époxysilanes, les stabilisants UV (ou anti-oxydants), les pigments, les colorants, et leur mélange. Lorsque ces adjuvants sont présents dans la composition, la somme totale de leur teneur est de préférence inférieure ou égale à 15% en poids par rapport au poids total de la composition adhésive, de mastic et/ou de revêtement de surface selon l'invention.

Lorsque la composition selon l'invention est destinée à être utilisée en tant que composition adhésive, celle-ci peut comprendre au moins une résine tackifiante.

A titre d'exemple de résine(s) tackifiante(s) utilisable(s), on peut citer n'importe quelle résine tackifiante habituellement utilisée dans le domaine des compositions adhésives.

De préférence, on utilise celles possédant une masse molaire moyenne en poids ($M_w$) allant de 200 et 5000 et de préférence choisies parmi :

- (i) des colophanes d'origine naturelle ou chimiquement modifiées, telles que par exemple la colophane extraite de la gomme de pins, la colophane de bois extraite des racines de l'arbre et leurs dérivés hydrogénés, dimérisés, polymérisés ou estérifiés par des monoalcools ou des polyols comme le glycérol, le pentaérythritol ou le néopentylglycol ;
- (ii) des résines obtenues par hydrogénation, polymérisation ou copolymérisation (avec un hydrocarbure aromatique) de mélanges d'hydrocarbures aliphatiques insaturés ayant environ 5, 9 ou 10 atomes de carbone issus de coupes pétrolières ;
- (iii) des résines terpéniques résultant généralement de la polymérisation d'hydrocarbures terpéniques comme par exemple le mono-terpène (ou pinène) en présence de catalyseurs de Friedel-Crafts, éventuellement modifiées par action de phénols ;
- (iv) des copolymères à base de terpènes naturels, par exemple le styrène/terpène, l'alpha-méthyl styrène/terpène et le vinyl toluène/terpène.

La résine tackifiante est choisie de manière à être compatible avec le polyuréthane à terminaisons NCO utilisé selon l'invention, c'est-à-dire de manière à ce que lorsqu'elle est mélangée dans les proportions 10 %/90 % avec ledit polyuréthane à terminaisons NCO, cela donne un mélange substantiellement homogène. En particulier, le mélange reste transparent (dans le spectre de la lumière visible - longueur d'onde allant de 380 à 780 nanomètre, mesuré dans le vide) et aucun(e) déphasage ou gélification totale ou partielle n'est observé(e) dans le mélange polyuréthane/résine.

La quantité totale de résine(s) tackifiante(s) pouvant être utilisée peut varier de 5 à 10% en poids du poids de la composition adhésive.

De préférence, la composition adhésive selon l'invention comprend :

- de 15 à 30% en poids d'une composition de polyuréthane à terminaisons NCO selon l'invention telle que décrite dans l'un quelconque des paragraphes précédents,
- de 40 à 65% en poids d'au moins une charge carbonatée,
- de 0,01 à 1% en poids d'au moins un catalyseur de réticulation,
- de préférence moins de 0,1% en poids de monomère MDI,
- de préférence moins de 0,5% en poids de composé(s) (A),

les pourcentages en poids étant exprimés par rapport au poids de la composition adhésive.

Lorsque la composition selon l'invention est destinée à être utilisée en tant que composition de mastic, celle-ci comprend de préférence :

- de 20 à 30% en poids d'une composition de polyuréthane à terminaisons NCO selon l'invention telle que décrite dans l'un quelconque des paragraphes précédents,
- de 20 à 25% en poids d'au moins une charge carbonatée,
- de 10 à 20% en poids, de préférence de 15 à 20% en poids d'au moins une charge organique et/ou au moins un agent de rhéologie,
- de 0,01 à 1% en poids d'au moins un catalyseur de réticulation,
- de préférence moins de 0,1% en poids de monomère MDI,
- de préférence moins de 0,5% en poids de composé(s) (A),

les pourcentages en poids étant exprimés par rapport au poids de la composition de mastic.

Lorsque la composition selon l'invention est destinée à être utilisée en tant que composition de revêtement de surface, celle-ci comprend de préférence :

- de 20 à 25% en poids d'une composition de polyuréthane à terminaisons NCO selon l'invention telle que décrite précédemment,
- de 25 à 50% en poids d'au moins une charge carbonatée,
- de 0,01 à 1% en poids d'au moins un catalyseur de réticulation,
- de préférence moins de 0,1% en poids de monomère MDI,
- de préférence moins de 0,5% en poids de composé(s) (A),

les pourcentages en poids étant exprimés par rapport au poids de la composition de revêtement de surface.

Les compositions adhésives, de mastic ou de revêtement de surface selon l'invention sont formulées de manière à être utilisables ou applicables à basse température (entre 5 et 35°C) et notamment à température ambiante (23°C).

La présente invention a pour objet en troisième lieu un procédé de préparation d'une composition selon l'invention stable dans le temps en terme de viscosité, comprenant une étape dans laquelle le(s) composé(s) (A), et le(s) autre(s) ingrédient(s) éventuellement présent(s) dans la composition selon l'invention, est (sont) mélangé(s) à une composition de polyuréthane(s) non thermofusible(s) à base de MDI à terminaisons NCO ayant une teneur en MDI inférieure ou égale à 1% en poids, de préférence inférieure ou égale à 0,8% en poids, et mieux encore inférieure ou égale à 0,5% en poids par rapport au poids de ladite composition, à une température inférieure ou égale à 50°C, de préférence allant de 5 à 45°C, et mieux encore allant de 20 à 30°C.

L'ajout et le mélange se font dans des conditions anhydres.

Le(s) composé(s) (A) utilisé(s) selon l'invention peu(ven)t être ajouté(s) sur le(s) polyuréthane(s) thermofusible(s) à base de MDI, dans la composition selon l'invention, soit directement après la fin de la réaction de synthèse dudit (desdits) polyuréthane(s), soit après que l'un, plusieurs, ou tous les autres ingrédients de la composition de l'invention, tels que décrits précédemment, ont été mélangés au(x)dit(s) polyuréthane(s).

Les exemples suivants sont donnés à titre purement illustratif de l'invention et ne sauraient être interprétés pour en limiter la portée.

**Exemples :**

Préparation des compositions de polyuréthane : exemples 1 à 3 (références)

Les compositions de polyuréthane des exemples 1 à 3 ont été préparées par mélange des ingrédients indiqués dans le tableau 1 à une température inférieure ou égale à 95°C dans des conditions anhydres. Les quantités indiquées dans le tableau 1 sont exprimées en pourcentage en poids par rapport au poids total de la composition de polyuréthane de chacun des exemples.

**Tableau 1**

| Ingrédients | 1 | 2 | 3 |
|---|---|---|---|
| PPG triol ayant une masse molaire moyenne en nombre de 4000 g/mol | 49,5 | 50,5 | 51,3 |
| PPG diol ayant une masse molaire moyenne en nombre de 2000 g/mol | 32,5 | 33,2 | 33,6 |
| 4,4'-MDI (%NCO = 33,6% en poids) | 18,1 | 16,2 | 15 |

(suite)

| Ingrédients | 1 | 2 | 3 |
|---|---|---|---|
| Catalyseur | 0,1 | 0,1 | 0,1 |
| Rapport NCO/OH | 2,01 | 1,78 | 1,61 |

Caractérisation :

Pour chacune des compositions de polyuréthane des exemples 1 à 3 obtenues :

- La teneur pondérale en monomère diisocyanate non réagi présent dans le milieu de synthèse du polyuréthane est mesurée par une méthode d'HPLC muni d'un détecteur UV tel que décrit précédemment (phase inversée en C18, phase mobile : solution aqueuse d'acétonitrile, tamponnée avec une solution aqueuse à 0,2% en poids de bisulfate de tétrabutylammonium à pH égal à 2,5, longueur d'onde de détection : 254nm). Les valeurs mesurées sont exprimées en pourcentage en poids par rapport au poids de la composition de chacun des exemples 1 à 3.
- La viscosité de la composition de polyuréthane est mesurée en fin de réaction (J), puis 30 jours après la fin de la réaction (J+30) à 23°C dans des conditions de stockage anhydres. On considère qu'au bout de 30 jours, l'augmentation de la viscosité dans le temps du polyuréthane est négligeable. La mesure de viscosité est réalisée à 23°C à l'aide d'un viscosimètre Brookfield RVT, avec une aiguille numéro 6 à une vitesse de rotation de 20 tours par minute (tr/mn). La valeur mesurée est exprimée en millipascal seconde (mPa.s).

**Tableau 2**

| Caractérisation avant stabilisation | 1 | 2 | 3 |
|---|---|---|---|
| Teneur en MDI résiduel calculée (en % en poids du poids de la composition de polyuréthane) | >1 | ≤ 0,8 | ≤ 0,5 |
| Viscosité à 23°C (mPa.s) (J) | 5500 | 5800 | 5200 |
| Viscosité à 23°C (mPa.s) (J+30) | 87 000 | 300 000 | 300 000 |

On observe qu'au bout de 30 jours de stockage dans des conditions identiques à celles sus-mentionnées, les compositions de polyuréthane des exemples 2 et 3 obtenues avec une teneur en monomère MDI résiduel inférieur ou égale à 1% en poids du poids de la composition de polyuréthane présentent une viscosité environ 3,5 fois supérieure à celle mesurée sur la composition de polyuréthane de l'exemple 1 obtenue avec une teneur en monomère MDI résiduel supérieure à 1% en poids du poids de la composition de polyuréthane.

La viscosité d'une composition de polyuréthane comprenant une teneur en monomère MDI résiduel inférieure ou égale à 1% en poids par rapport au poids de la composition de polyuréthane évolue donc plus rapidement que celle d'une composition de polyuréthane comprenant plus de 1% en poids de monomère MDI résiduel par rapport au poids de la composition de polyuréthane.

Stabilisation de la composition de polyuréthane de l'exemple 2 : exemples 2A à 2I

Les compositions des exemples 2A à 2I sont préparées en mélangeant la composition de polyuréthane de l'exemple 2 (noté polyuréthane 2) et un composé (A) de volume molaire inférieur ou égal à 300 mL/mol conformément à l'invention, ou un isocyanate de volume molaire supérieur à 300 mL/mol à titre de comparaison. La nature et les quantités des ingrédients utilisés sont indiqués dans le tableau 3 plus bas. Les quantités figurant dans le tableau 3 sont exprimées en gramme par rapport au poids de la composition.

Caractérisation :

Pour chacune des compositions des exemples 2A à 2F, on a évalué l'effet de l'ajout d'un composé (A) de volume molaire inférieur ou égal à 300 mL/mol dans la composition de polyuréthane de l'exemple 2 jugée instable en terme de viscosité.

A titre de comparaison, pour chacune des compositions des exemples 2G à 2I, on a évalué l'effet de l'ajout d'un isocyanate de volume molaire supérieur à 300 mL/mol dans la composition de polyuréthane de l'exemple 2 jugée instable

en terme de viscosité.

Pour chacune des compositions 2A à 2I, on a calculé le pourcentage de stabilisation observé à J+30 correspondant à la réduction de viscosité mesurée à 23°C, 30 jours après ajout du composé isocyanate dans la composition de polyuréthane par rapport à la viscosité de la même composition non stabilisée (composition de l'exemple 2) observée à la même période et dans les mêmes conditions. Cette réduction de viscosité est calculée par la formule suivante et est exprimée en pourcentage:

$$100 - \left( \frac{\text{viscosité de la composition de l'exemple 2}}{\text{viscosité de la composition de l'exemple 2i (avec i variant de A à I)}} \text{ x } 100 \right)$$

Lorsque l'ajout du composé isocyanate conduit à une réduction de la viscosité par rapport à la viscosité de référence de l'exemple 2, la valeur du pourcentage de stabilisation est précédée par le signe « + » indiquant un gain de stabilité par rapport à la référence (constituée par la composition de l'exemple 2).

Dans le cas contraire, la valeur du pourcentage de stabilisation est précédée par le signe « - » indiquant une perte de stabilité par rapport à ladite référence.

Les mesures de viscosité sont réalisées dans les mêmes conditions de mesure (appareillage et temps) et de stockage (conditions anhydres) que précédemment pour les exemples 1 à 4. Les résultats sont indiqués dans le tableau 3 ci-dessous.

Résultats :

On observe qu'au bout de 30 jours de stockage dans les conditions identiques à celle sus-mentionnées, les compositions des exemples 2A à 2F selon l'invention comprenant un composé (A) de volume molaire inférieur ou égale à 300 mL/mol présentent une réduction de viscosité significative (en particulier supérieure ou égale à 50%) par rapport à la viscosité mesurée sur la composition de polyuréthane de l'exemple 2 non stabilisée.

En revanche, on observe qu'au bout de 30 jours de stockage, les compositions des exemples comparatifs 2G à 2I comprenant un diisocyanate de volume molaire supérieur à 300 mL/mol ne présentent pas de réduction de viscosité significative (inférieure ou égale à 5%) par rapport à la viscosité mesurée sur la composition de polyuréthane de l'exemple 2 non stabilisée.

Stabilisation de la composition de polyuréthane de l'exemple 3 : exemples 3A à 3I

Les compositions des exemples 3A à 3I sont préparées en mélangeant la composition de polyuréthane de l'exemple 3 (noté polyuréthane 3) et un composé (A) de volume molaire inférieur ou égal à 300 mL/mol conformément à l'invention, ou un diisocyanate de volume molaire supérieur à 300 mL/mol à titre de comparaison. La nature et les quantités des ingrédients utilisés sont indiqués dans le tableau 4 ci-dessous. Les quantités figurant dans le tableau 4 sont exprimées en gramme par rapport au poids de la composition.

Caractérisation :

Pour chacune des compositions des exemples 3A à 3F, on a évalué l'effet de l'ajout d'un composé (A) de volume molaire inférieur ou égal à 300 mL/mol dans la composition de polyuréthane de l'exemple 3 jugée instable en terme de viscosité.

A titre de comparaison, pour chacune des compositions des exemples 3G à 3I, on a évalué l'effet de l'ajout d'un diisocyanate de volume molaire supérieur à 300 mL/mol dans la composition de polyuréthane de l'exemple 3 jugée instable en terme de viscosité.

Les mesures de viscosité sont réalisées dans les mêmes conditions de mesure et de stockage que précédemment pour les exemples 1 à 4. Les résultats sont indiqués dans le tableau 4 ci-dessous. On en déduit comme précédemment la valeur de stabilisation exprimée en pourcentage. La comparaison est faite cette fois par rapport à la viscosité de la composition de référence, constituée par la composition de l'exemple 3.

Résultats :

On observe qu'au bout de 30 jours de stockage dans les conditions sus-mentionnées, les compositions des exemples selon l'invention 3A à 3F comprenant un composé (A) de volume molaire inférieur ou égale à 300 mL/mol présentent une réduction de viscosité significative (en particulier supérieure ou égale à 30%) par rapport à la viscosité mesurée sur la composition de polyuréthane de l'exemple 3 non stabilisée.

En revanche, on observe qu'au bout de 30 jours dans les conditions de stockage sus-mentionnées, les compositions des exemples comparatif 3G à 3I comprenant un diisocyanate de volume molaire supérieur à 300 mL/mol ne présentent pas de réduction de viscosité significative (inférieure ou égale à 5%) par rapport à la viscosité mesurée sur la composition de polyuréthane de l'exemple 3 non stabilisée.

Exemples de stabilisation de compositions de mastic

On a testé l'effet de stabilisation de l'ajout d'un composé A selon l'invention sur deux compositions de mastic différente et comprenant chacune:

- de 20 à 30% en poids d'une composition comprenant au moins 98% en poids d'un polyuréthane non thermofusible à terminaisons NCO à base de MDI avec une teneur en MDI telle que la teneur en MDI par rapport au poids de la composition de mastic est inférieure à 0,1% en poids,
- de 20 à 25% en poids de charge carbonatée,
- de 10 à 20% en poids de charge organique et/ou agent de rhéologie,
- de 0,01 à 1% en poids d'un catalyseur de réticulation.

Pour chacune des compositions de mastic testées, on a ajouté à 100 g de composition de mastic, 0,1 g de XDI, à une température inférieure ou égale à 50°C et dans des conditions anhydres.

Immédiatement après la fin du mélange (t0) et 3 semaines après la fin du mélange (t+3 semaines), les compositions de mastic sont extrudées au travers d'une buse d'extrusion de 4 mm de diamètre sous une pression de 3 bar à température et hygrométrie constantes afin d'évaluer leur viscosité.

La mesure de viscosité (en millipascal seconde (mPa.s)) est réalisée à 23°C à t0 et t+3 semaines à l'aide d'un viscosimètre Brookfield RVT, avec une aiguille numéro 6 à une vitesse de rotation de 20 tours par minute (tr/mn).

Pour chacune des compositions de mastic testées, on a calculé l'amélioration de la vitesse d'extrusion, exprimée en pourcent, observée à t0 et à t+3 semaine suite à l'ajout du XDI par rapport à la vitesse observée sans stabilisation par du XDI.

On a constaté que l'ajout de 0,1% de XDI dans les compositions de mastic conduit à des vitesses d'extrusion satisfaisantes (supérieure ou égale à 70g/mn) et supérieures à celles mesurées sur les compositions de mastic sans XDI. On observe un gain de vitesse d'extrusion de l'ordre de 60 à 85% par rapport aux compositions de mastic non stabilisée, traduisant une meilleur stabilité en terme de viscosité des compositions de mastic stabilisées selon l'invention.

**Tableau 3**

| Ingrédients \ Exemples | 2 | 2A | 2B | 2C | 2D | 2E | 2F | 2G | 2H | 2I |
|---|---|---|---|---|---|---|---|---|---|---|
| | référence | invention | | | | | | comparatif | | |
| Polyuréthane 2 | 100 | 100 | 100 | 100 | 100 | 100 | 100 | 100 | 100 | 100 |
| XDI (volume molaire =157 mL/mol) | - | 0,1 | 0,4 | - | - | - | - | - | - | - |
| IPDI (volume molaire = 212 mL/mol) | - | - | - | 0,1 | 0,4 | - | - | - | - | - |
| HMDI (volume molaire = 246 mL/mol) | - | - | - | - | - | 0,1 | 0,4 | - | - | - |
| Diisocyanate (volume molaire = 621 mL/mol) | - | - | - | - | - | - | - | 0,1 | 0,4 | 1 |
| Teneur en MDI résiduel calculée (en % en poids du poids de la composition de polyuréthane) | ≤ 0,8 | ≤ 0,8 | ≤ 0,8 | ≤ 0,8 | ≤ 0,8 | ≤ 0,8 | ≤ 0,8 | ≤ 0,8 | ≤ 0,8 | ≤ 0,8 |
| Viscosité à 23°C (mPa.s) (J) | 5800 | 5160 | 4640 | 5040 | 5100 | 4820 | 4800 | 4890 | 4960 | 5100 |
| Viscosité à 23°C (mPa.s) (J+30) | 300000 | 109000 | 100000 | 140000 | 130000 | 125000 | 115000 | 290000 | 310000 | 315000 |
| Stabilisation (à J+30) par rapport à la composition de référence | 0% | + 63,7% | +66,7% | +53,3% | +56,7% | +58,3% | +61,7% | +3,3% | -3,3% | -5,0% |

**Tableau 4**

| Ingrédients \ Exemples | 3 | 3A | 3B | 3C | 3D | 3E | 3F | 3G | 3H | 3I |
|---|---|---|---|---|---|---|---|---|---|---|
| | référence | invention | | | | | | comparatif | | |
| Polyuréthane 3 | 100 | 100 | 100 | 100 | 100 | 100 | 100 | 100 | 100 | 100 |
| XDI (volume molaire =157 mL/mol) | - | 0,3 | 0,8 | - | - | - | - | - | - | - |
| IPDI (volume molaire = 212 mL/mol) | - | - | - | 0,3 | 0,8 | - | - | - | - | - |
| HMDI (volume molaire = 246 mL/mol) | - | - | - | - | - | 0,3 | 0,8 | - | - | - |
| Diisocyanate (volume molaire = 621 mL/mol) | - | - | - | - | - | - | - | 0,1 | 0,4 | 1 |
| Teneur en MDI résiduel calculée (en % en poids du poids de la composition de polyuréthane) | 0,5 | 0,5 | 0,5 | 0,5 | 0,5 | 0,5 | 0,5 | 0,5 | 0,5 | 0,5 |
| Viscosité à 23°C (mPa.s) (J) | 5200 | 4800 | 4400 | 4800 | 4600 | 4800 | 4400 | 5600 | 4900 | 4650 |
| Viscosité à 23°C (mPa.s) (J+30) | 300 000 | 170000 | 130000 | 200000 | 180000 | 180000 | 130000 | 315000 | 289000 | 298000 |
| Stabilisation (à J+30) par rapport à la composition de référence | 0% | +43,3% | +56,7% | +33,3% | +%40% | +40% | +56,7% | -5,0% | +3,7% | +0,7% |

## Revendications

**1.** Composition de polyuréthane comprenant :

a) au moins 98% en poids d'au moins un polyuréthane à terminaisons NCO à base de diisocyanate de diphényle méthane (MDI), présentant une viscosité mesurée à 23°C inférieure ou égale à 300 000 mPa.s, ladite viscosité étant mesurée à l'aide d'un viscosimètre Brookfield selon la norme ISO 2555,
b) une teneur en monomère MDI, issu de la synthèse dudit polyuréthane a), inférieure ou égale à 1% en poids,
c) au moins un composé isocyanate de volume molaire inférieur ou égal à 300 millilitres par mol (mL/mol) (noté composé A), choisi(s) parmi ceux dont le(s) groupe(s) isocyanate n'est (ne sont) pas relié(s) à un atome de carbone d'un cycle hydrocarboné aromatique,
le volume molaire étant mesuré à une température allant de 20 à 25°C et à pression atmosphérique de 1 bar,
les pourcentages en poids étant exprimés par rapport au poids total de ladite composition,
ladite composition étant **caractérisée en ce que** le(s) composé(s) (A) est(sont) choisi(s) parmi les diisocyanates.

**2.** Composition selon la revendication 1 , caractérisée en ce le(s) composé(s) (A) est (sont) choisi(s) parmi le XDI, HMDI et IPDI.

**3.** Composition selon l'une quelconque des revendications 1 à 2, **caractérisée en ce qu'**elle comprend une teneur totale en composé(s) (A) non nulle et inférieure ou égale à 1,5% en poids par rapport au poids de ladite composition.

**4.** Composition selon l'une quelconque des revendications 1 à 3, **caractérisée en ce que** le(s) polyuréthane(s) à terminaisons NCO à base de diisocyanate de diphényle méthane présentant une viscosité mesurée à 23°C inférieure ou égale à 300 000 mPa.s, est (sont) susceptible(s) d'être obtenu(s) par une réaction de polyaddition d'une composition de polyisocyanate(s) constituée de MDI, et d'une composition constituée de polyol(s), à une température inférieure à 95°C, dans des conditions anhydres, dans des quantités de polyisocyanate(s) et de polyol(s) conduisant à un rapport NCO/OH noté r1 allant de 1,60 à 1,95.

**5.** Composition selon la revendication 4, **caractérisée en ce que** le rapport NCO/OH noté r1 va de 1,60 à 1,75.

**6.** Composition selon la revendication 4 ou 5, **caractérisée en ce que** la composition constituée de polyol(s) est un mélange de polyéther diol et de polyéther triol.

**7.** Composition comprenant :

- de 10 à 30% en poids d'une composition de polyuréthane telle que définie dans l'une quelconque des revendications 1 à 6,
- de 25 à 70% en poids d'au moins une charge,
- de 0,01 à 1% en poids d'au moins un catalyseur de réticulation,

les pourcentages en poids étant exprimés par rapport au poids total de ladite composition.

**8.** Procédé de préparation d'une composition telle que définie dans l'une quelconque des revendications 1 à 6 ou 7, comprenant une étape dans laquelle le(s) composé(s) (A) tel que défini dans l'une des revendications 1 à 3, et le(s) autre(s) ingrédient(s) éventuellement présent(s) dans ladite composition, est (sont) mélangé(s) à une composition de polyuréthane(s) comprenant au moins un polyuréthane à base de MDI à terminaisons NCO présentant une viscosité mesurée à 23°C inférieure ou égale à 300 000 mPa.s, ladite viscosité étant mesurée à l'aide d'un viscosimètre Brookfield selon la norme ISO 2555, et une teneur en MDI inférieure ou égale à 1% en poids par rapport au poids de ladite composition de polyuréthane(s), à une température inférieure ou égale à 50°C, dans des conditions anhydres, en post-synthèse dudit polyuréthane à base de MDI à terminaisons NCO.

**9.** Procédé de préparation selon la revendication 8 d'une composition telle que définie dans la revendication 1 à 6 ou 7, **caractérisé en ce que** le(s) composé(s) (A) est (sont) mélangé(s) à ladite composition :

- soit directement après la fin de la réaction de synthèse du polyuréthane à base de MDI à terminaisons NCO tel que défini dans la revendication 8,
- soit après que l'un, plusieurs, ou tous les autres ingrédients de la composition telle que définie dans la revendication 7 ont été mélangés au polyuréthane à base de MDI à terminaisons NCO tel que défini dans la

revendication 8.

**10.** Utilisation d'au moins un composé (A) tel que défini dans l'une des revendications 1 à 3 comme agent stabilisant de viscosité d'une composition comprenant au moins un polyuréthane à terminaisons NCO à base de MDI présentant une viscosité mesurée à 23°C inférieure ou égale à 300 000 mPa.s, ladite viscosité étant mesurée à l'aide d'un viscosimètre Brookfield selon la norme ISO 2555, et une teneur en MDI, issu de la synthèse dudit polyuréthane, inférieure ou égale à 1% en poids par rapport au poids de ladite composition.

## Patentansprüche

**1.** Polyurethanzusammensetzung, umfassend:

a) mindestens 98 Gew.-% mindestens eines Polyurethans mit NCO-Endgruppen auf der Basis von Diphenylmethandiisocyanat (MDI) mit einer bei 23 °C gemessenen Viskosität kleiner oder gleich 300.000 mPa.s, wobei die Viskosität mit Hilfe eines Brookfield-Viskosimeters gemäß ISO-Norm 2555 gemessen wird,
b) einen Gehalt an MDI-Monomer, das aus der Synthese des Polyurethans a) stammt, kleiner oder gleich 1 Gew.-%,
c) mindestens eine Isocyanatverbindung mit einem molaren Volumen kleiner oder gleich 300 Milliliter pro Mol (ml/mol) (als Verbindung A bezeichnet), ausgewählt aus denjenigen Verbindungen, deren Isocyanatgruppe bzw. Isocyanatgruppen nicht an ein Kohlenstoffatom eines aromatischen Kohlenwasserstoffrings gebunden ist bzw. sind,
wobei das molare Volumen bei einer Temperatur im Bereich von 20 bis 25 °C und bei Normaldruck von 1 bar gemessen wird,
wobei sich die Gewichtsprozentangaben auf das Gesamtgewicht der Zusammensetzung beziehen, wobei die Zusammensetzung **dadurch gekennzeichnet ist, dass** die Verbindung bzw. die Verbindungen (A) aus Diisocyanaten ausgewählt ist bzw. sind.

**2.** Zusammensetzung nach Anspruch 1, **dadurch gekennzeichnet, dass** die Verbindung bzw. die Verbindungen (A) aus XDI, HMDI und IPDI ausgewählt ist bzw. sind.

**3.** Zusammensetzung nach einem der Ansprüche 1 bis 2, **dadurch gekennzeichnet, dass** sie einen Gesamtgehalt an Verbindung bzw. Verbindungen (A) aufweist, der ungleich null und kleiner oder gleich 1,5 Gew.-%, bezogen auf das Gewicht der Zusammensetzung, ist.

**4.** Zusammensetzung nach einem der Ansprüche 1 bis 3, **dadurch gekennzeichnet, dass** das Polyurethan bzw. die Polyurethane mit NCO-Endgruppen auf Basis von Diphenylmethandiisocyanat eine bei 23 °C gemessene Viskosität kleiner oder gleich 300.000 mPa.s aufweisen, durch eine Polyadditionsreaktion einer aus MDI bestehenden Polyisocyanatzusammensetzung und einer aus Polyol(en) bestehenden Zusammensetzung bei einer Temperatur von weniger als 95 °C unter wasserfreien Bedingungen erhältlich ist bzw. sind, wobei die Mengen von Polyisocyanat(en) und Polyol(en) zu einem als r1 bezeichneten NCO/OH-Verhältnis im Bereich von 1,60 bis 1,95 führen.

**5.** Zusammensetzung nach Anspruch 4, **dadurch gekennzeichnet, dass** das als r1 bezeichnete NCO/OH-Verhältnis im Bereich von 1,60 bis 1,75 liegt.

**6.** Zusammensetzung nach Anspruch 4 oder 5, **dadurch gekennzeichnet, dass** es sich bei der aus Polyol(en) bestehenden Zusammensetzung um eine Mischung von Polyetherdiol und Polyetherpolyol handelt.

**7.** Zusammensetzung, umfassend:

- 10 bis 30 Gew.-% einer Polyurethanzusammensetzung gemäß einem der Ansprüche 1 bis 6,
- 25 bis 70 Gew.-% mindestens eines Füllstoffs,
- 0,01 bis 1 Gew.-% mindestens eines Vernetzungskatalysators,

wobei sich die Gewichtsprozentangaben auf das Gesamtgewicht der Zusammensetzung beziehen.

**8.** Verfahren zur Herstellung einer Zusammensetzung gemäß einem der Ansprüche 1 bis 6 oder 7, umfassend einen Schritt, der das Mischen der Verbindung bzw. der Verbindungen (A) gemäß einem der Ansprüche 1 bis 3 und des

anderen Bestandteils bzw. der anderen Bestandteile, der bzw. die gegebenenfalls in der Zusammensetzung vorhanden ist bzw. sind, mit einer Polyurethanzusammensetzung, umfassend mindestens ein Polyurethan auf der Basis von MDI mit NCO-Endgruppen mit einer bei 23 °C gemessenen Viskosität kleiner oder gleich 300.000 mPa.s, wobei die Viskosität mit Hilfe eines Brookfield-Viskosimeters gemäß ISO-Norm 2555 gemessen wird, und einem MDI-Gehalt kleiner oder gleich 1 Gew.-%, bezogen auf das Gewicht der Polyurethanzusammensetzung, nach der Synthese des Polyurethans auf der Basis von MDI mit NCO-Endgruppen bei einer Temperatur kleiner oder gleich 50 °C unter wasserfreien Bedingungen umfasst.

**9.** Herstellungsverfahren nach Anspruch 8 für eine Zusammensetzung gemäß Anspruch 1 bis 6 oder 7, **dadurch gekennzeichnet, dass** das Mischen der Verbindung bzw. der Verbindungen (A) mit der Zusammensetzung

- entweder direkt nach dem Ende der Umsetzung zur Synthese des Polyurethans auf der Basis von MDI mit NCO-Endgruppen gemäß Anspruch 8
- oder nach dem Mischen eines, mehrerer oder aller anderen Bestandteile der Zusammensetzung gemäß Anspruch 7 mit dem Polyurethan auf der Basis von MDI mit NCO-Endgruppen gemäß Anspruch 8 erfolgt.

**10.** Verwendung mindestens einer Verbindung (A) gemäß einem der Ansprüche 1 bis 3 als Mittel zur Stabilisierung der Viskosität einer Zusammensetzung, umfassend mindestens ein Polyurethan mit NCO-Endgruppen auf der Basis von MDI mit einer bei 23 °C gemessenen Viskosität kleiner oder gleich 300.000 mPa.s, wobei die Viskosität mit Hilfe eines Brookfield-Viskosimeters gemäß ISO-Norm 2555 gemessen wird, und einem Gehalt an MDI-Monomer, das aus der Synthese des Polyurethans stammt, kleiner oder gleich 1 Gew.-%, bezogen auf das Gewicht der Zusammensetzung.

## Claims

**1.** Polyurethane composition comprising:

a) at least 98% by weight of at least one polyurethane bearing NCO end groups based on diphenylmethane diisocyanate (MDI), with a viscosity measured at 23°C of less than or equal to 300 000 mPa.s, said viscosity being measured using a Brookfield viscometer according to the standard ISO 2555,
b) a content of MDI monomer, derived from the synthesis of said polyurethane a), less than or equal to 1% by weight,
c) at least one isocyanate compound with a molar volume of less than or equal to 300 millilitres per mole (mL/mol) (noted compound A), chosen from those in which the isocyanate group(s) are not linked to a carbon atom of an aromatic hydrocarbon-based ring,
the molar volume being measured at a temperature ranging from 20 to 25°C and at atmospheric pressure of 1 bar, the weight percentages being expressed relative to the total weight of said composition,
said composition being **characterized in that** the compound(s) (A) is (are) chosen from diisocyanates.

**2.** Composition according to Claim 1, **characterized in that** the compound(s) (A) is (are) chosen from XDI, HMDI and IPDI.

**3.** Composition according to any one of Claims 1 to 2, **characterized in that** it comprises a total content of compound(s) (A) which is non-zero and less than or equal to 1.5% by weight relative to the weight of said composition.

**4.** Composition according to any one of Claims 1 to 3, **characterized in that** the polyurethane (s) bearing NCO end groups based on diphenylmethane diisocyanate having a viscosity measured at 23°C of less than or equal to 300 000 mPa.s may be obtained via a polyaddition reaction of a polyisocyanate composition consisting of MDI and of a composition consisting of polyol(s), at a temperature of less than 95°C, under anhydrous conditions, in amounts of polyisocyanate(s) and of polyol(s) leading to an NCO/OH ratio noted r1 ranging from 1.60 to 1.95.

**5.** Composition according to Claim 4, **characterized in that** the NCO/OH ratio noted r1 ranges from 1.60 to 1.75.

**6.** Composition according to Claim 4 or 5, **characterized in that** the composition consisting of polyol(s) is a mixture of polyether diol and of polyether triol.

**7.** Composition comprising:

- from 10% to 30% by weight of a polyurethane composition as defined in any one of Claims 1 to 6,
- from 25% to 70% by weight of at least one filler,
- from 0.01% to 1% by weight of at least one crosslinking catalyst,

the weight percentages being expressed relative to the total weight of said composition.

**8.** Process for preparing a composition as defined in any one of Claims 1 to 6 or 7, comprising a step in which the compound(s) (A) as defined in one of Claims 1 to 3, and the other ingredient(s) optionally present in said composition, are mixed with a polyurethane composition comprising at least one polyurethane based on MDI bearing NCO end groups having a viscosity measured at 23°C of less than or equal to 300 000 mPa.s, said viscosity being measured using a Brookfield viscometer according to the standard ISO 2555, and an MDI content of less than or equal to 1% by weight relative to the weight of said polyurethane composition, at a temperature of less than or equal to 50°C, under anhydrous conditions in post-synthesis of said MDI-based polyurethane bearing NCO end groups.

**9.** Process according to Claim 8 for preparing a composition as defined in Claim 1 to 6 or 7, **characterized in that** the compound(s) (A) are mixed with said composition:

- either directly after the end of the reaction for the synthesis of the polyurethane based on MDI bearing NCO end groups as defined in Claim 8,
- or after one, several or all of the other ingredients of the composition as defined in Claim 7 have been mixed with the polyurethane based on MDI bearing NCO end groups as defined in Claim 8.

**10.** Use of at least one compound (A) as defined in one of Claims 1 to 3 as an agent for stabilizing the viscosity of a composition comprising at least one polyurethane bearing NCO end groups based on MDI having a viscosity measured at 23°C of less than or equal to 300 000 mPa.s, said viscosity being measured using a Brookfield viscometer according to the standard ISO 2555, and a content of MDI, obtained from the synthesis of said polyurethane, of less than or equal to 1% by weight relative to the weight of said composition.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 6515164 B
- DE 102008025793
- WO 2005097861 A
- WO 2011051019 A
- FR 1591172


### Littérature non-brevet citée dans la description


- **ROBERT M. EVANS**. *Polyurethane Sealants*, ISBN 087762-998-6